(19) Europäisches Patentamt
European Patent Office
Office européen des brevets

(11) **EP 2 440 022 A2**

(12) **EUROPÄISCHE PATENTANMELDUNG**

(43) Veröffentlichungstag:
**11.04.2012 Patentblatt 2012/15**

(51) Int Cl.:
*H05B 41/282* (2006.01)    *H05B 41/295* (2006.01)

(21) Anmeldenummer: **11182733.3**

(22) Anmeldetag: **26.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.10.2010 DE 102010042020**

(71) Anmelder: **OSRAM AG**
**81543 München (DE)**

(72) Erfinder: **Klier, Jürgen**
**83301 Traunreut (DE)**

(54) **Schaltung und Verfahren zur Ansteuerung einer Lampe**

(57) Es wird eine Schaltung zur Ansteuerung einer Lampe (101), insbesondere einer Leuchtstofflampe, die über eine Brückenschaltung betrieben wird, angegeben mit einer analogen Regelung (304) zur Ansteuerung der Brückenschaltung in einem ersten Betriebsmodus, und mit einer Logikschaltung (305, 501) zur Ansteuerung der Brückenschaltung in einem zweiten Betriebsmodus. Weiterhin wird ein entsprechendes Verfahren zur Ansteuerung einer Lampe vorgeschlagen. Weiterhin werden eine Lampe, Leuchte oder ein Leuchtmodul mit mindestens einer solchen Schaltung vorgeschlagen.

## Fig.3

EP 2 440 022 A2

**Beschreibung**

Die Erfindung betrifft eine Schaltung und ein Verfahren zur Ansteuerung einer Lampe, insbesondere einer Leuchtstofflampe. Weiterhin wird eine Lampe, Leuchte oder ein Leuchtmodul mit mindestens einer solchen Schaltung vorgeschlagen.

Bei einem elektronischen Betriebsgerät für eine Lampe, auch bezeichnet als elektronisches Vorschaltgerät, insbesondere in einer dimmbaren Ausführung, können zwei Betriebsmodi unterschieden werden. Einerseits gibt es einen Normalmodus, in dem die Lampe brennt und alle Betriebsparameter in einem zulässigen Bereich sind. Eine Betriebsfrequenz einer Brückenschaltung des elektronischen Betriebsgeräts wird durch einen Lampen-, einen Leistungs- oder einen Stromregler bestimmt. Andererseits gibt es auch einen Fehlermodus, in dem die Lampe entweder nicht brennt (z.B. während des Vorheizens der Lampe oder beim Zünden der Lampe) oder in dem die Lampe brennt, aber eine Überspannung oder ein Überstrom erkannt wird. In diesen Fällen wird die Betriebsfrequenz der Brückenschaltung von einer für den Fehlermodus zuständigen Schaltung (z.B. einer Fehlerlogik) bestimmt.

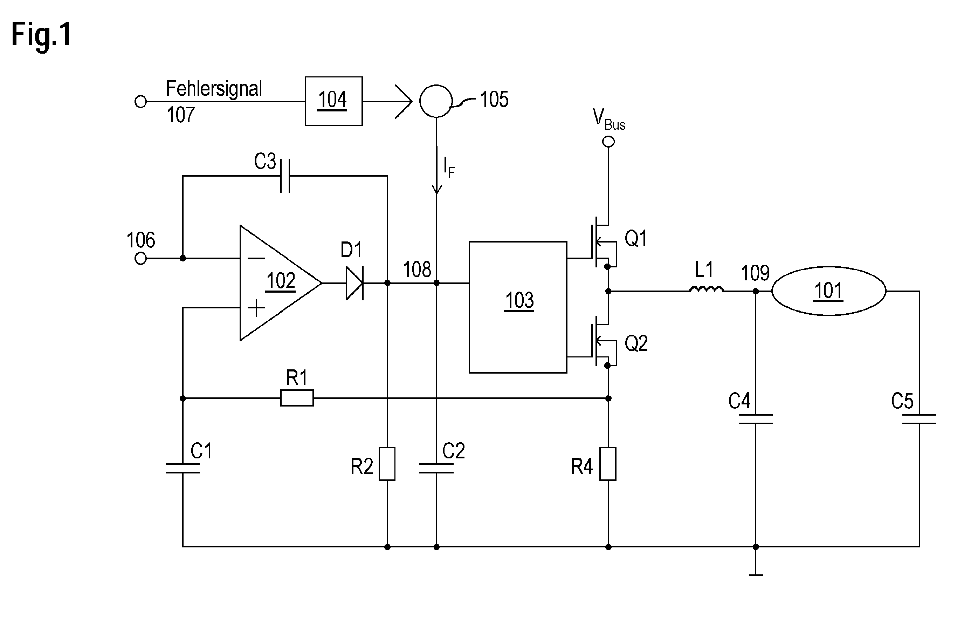

**Fig.1** zeigt ein Blockschaltbild mit einem Betriebsgerät zur Ansteuerung einer Lampe 101.

Ein Fehlersignal 107 wird von dem Eingang einer Logikschaltung 104 detektiert, der Ausgang der Logikschaltung steuert eine Stromquelle 105, die einen Strom $I_F$ (Fehlerstrom) an einem Knoten 108 bereitstellen kann. Der Knoten 108 ist mit dem Eingang eines spannungsgesteuerten Oszillators (VCOs) 103 verbunden, dessen Ausgänge eine Halbbrückenschaltung umfassend Mosfets Q1 und Q2, insbesondere die Gate-Anschlüsse der Mosfets Q1, Q2 ansteuern. Der Drain-Anschluss des Mosfets Q2 ist mit dem Source-Anschluss des Mosfets Q1 und über eine Induktivität L1 mit einem Knoten 109 verbunden. Der Drain-Anschluss des Mosfets Q1 ist mit einer Versorgungsspannung $V_{Bus}$ der Halbbrückenschaltung verbunden und der Source-Anschluss des Mosfets Q2 ist über einen Widerstand R4 mit Masse verbunden.

Weiterhin ist der Source-Anschluss des Mosfets Q2 auch über einen Widerstand R1 mit dem nichtinvertierenden Eingang eines Operationsverstärkers 102 verbunden, der weiterhin über einen Kondensator CI mit Masse verbunden ist. An dem invertierenden Eingang des Operationsverstärkers 102 liegt ein Sollwert 106 an. Weiterhin ist der invertierende Eingang über einen Kondensator C3 mit dem Knoten 108 verbunden. Der Ausgang des Operationsverstärkers 102 ist über eine Diode D1 mit dem Knoten 108 verbunden, wobei die Kathode der Diode D1 in Richtung des Knotens 108 zeigt. Der Knoten 108 ist über einen Widerstand R2 mit Masse verbunden. Auch ist der Knoten 108 über einen Kondensator C2 mit Masse verbunden.

Die Lampe 101 ist einerseits mit dem Knoten 109 und andererseits über einen Kondensator C5 mit Masse verbunden. Zwischen dem Knoten 109 und Masse ist ein Kondensator C4 angeordnet.

In dem Normalmodus führt der Operationsverstärker 102 einen Soll-Ist-Vergleich zwischen dem vorgegebenen Wert 106 (Sollwert) und einer Spannung an dem Widerstand R4 (Istwert), gefiltert durch das RC-Glied umfassend den Widerstand R1 und den Kondensator CI, durch. Der Operationsverstärker 102 steuert über die Diode D1 den spannungsgesteuerten Oszillator 103 und bestimmt damit die jeweils passende Betriebsfrequenz der Halbbrückenschaltung umfassend die Mosfets Q1 und Q2. Die Halbbrückenschaltung versorgt über die Induktivität L1 sowie die Kondensatoren C4 und C5 die Lampe 101 mit der erforderlichen Leistung.

Im Falle eines Fehlers (dabei kann es sich auch um eine Vorheizphase oder um einen Zündbetrieb handeln), empfängt die Logikschaltung 104 das Fehlersignal 107 und steuert die Stromquelle 105 an, die mit dem Fehlerstrom $I_F$ den Kondensator C2 lädt. Damit steigt die Spannung an dem Knoten 108 und somit die Betriebsfrequenz der Halbbrückenschaltung. Der Operationsverstärker 102 versucht dagegenzusteuern, kann aber aufgrund der Entkopplung durch die Diode D1 die Spannung an dem spannungsgesteuerten Oszillator 103 und damit die Betriebsfrequenz der Halbbrückenschaltung nicht absenken.

Ist der Fehler abgeklungen, wird der Fehlerstrom $I_F$ nicht mehr in den Knoten eingeprägt. Der Widerstand R2 entlädt den Kondensator C2 bis die Betriebsfrequenz der Vorgabe durch den Operationsverstärker 102 entspricht. Somit steuert der Operationsverstärker 102 wieder die Betriebsfrequenz der Halbbrückenschaltung.

Dieser Ansatz weist den Nachteil auf, dass der Operationsverstärker 102 die Betriebsfrequenz nur so schnell absenken kann, wie dies aufgrund der Zeitkonstante des RC-Glieds aus dem Widerstand R2 und dem Kondensator C2 möglich ist (Zeitkonstante $\tau$ = R2C2). Dies kann die Stabilität der Regelung nachteilig beeinflussen.

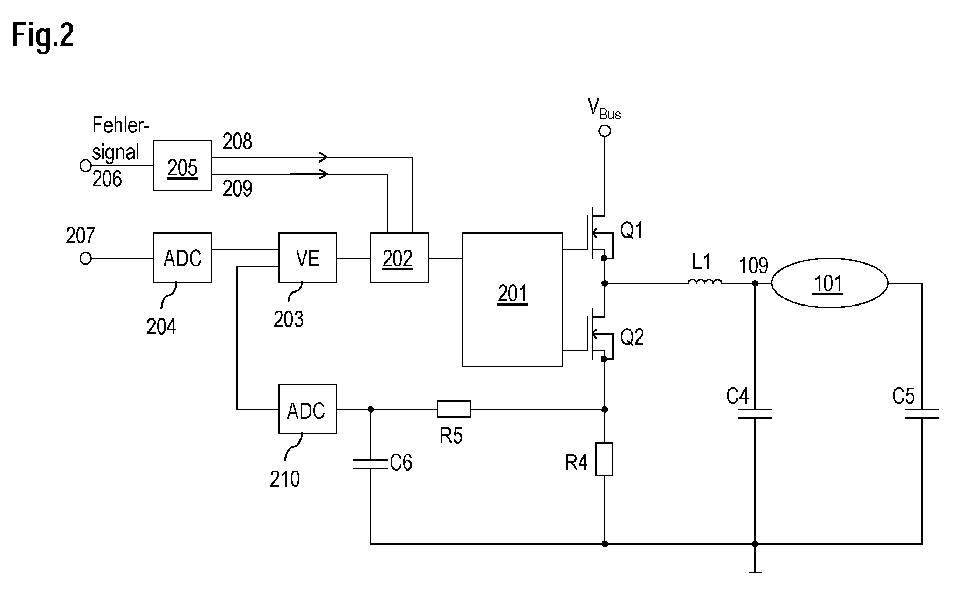

**Fig.2** zeigt ein schematisches Blockschaltbild für einen digitalen Ansatz.

Anstelle des VCOs 103 wird in Fig.2 ein Frequenzzähler 201 eingesetzt, um die Halbbrückenschaltung umfassend die Mosfets Q1, Q2 anzusteuern. Die Halbbrückenschaltung und die daran angeschlossene Lampe 101 mit Beschaltung über die Induktivität L1, die Kondensatoren C4 und C5, sowie der Widerstand R4 entsprechen der in Fig. 1 dargestellten Schaltung.

Ein Fehlersignal 206 ist mit dem Eingang einer Logikschaltung 205 verbunden. Die Logikschaltung 205 weist einen Ausgang 208 auf, der den Betriebsmodus (Normalmodus oder Fehlermodus) anzeigt. Weiterhin verfügt die Logikschaltung 205 über einen Ausgang 209, der eine Frequenz zur Ansteuerung der Halbbrückenschaltung angibt. Die Ausgänge 208 und 209 sind mit einer Umschalteinheit 202 verbunden.

Ein Sollwert 207 wird über einen Analog-Digital-Wandler 204 an eine digitale Verarbeitungseinheit 203 (VE, Controller) weitergeleitet, deren Ausgang über die Umschalteinheit 202 mit dem Eingang des Frequenzzählers 201 verbunden ist.

Der Source-Anschluss des Mosfets Q2 ist über einen Widerstand R5 mit dem Eingang eines Analog-Digital-Wandlers 210 verbunden. Der Eingang des Analog-Digital-Wandlers 210 ist über einen Kondensator C6 mit Masse verbunden und der Ausgang des Analog-Digital-Wandlers 210 ist mit einem Eingang der Verarbeitungseinheit 203 verbunden.

In dem Normalmodus führt die digitale Verarbeitungseinheit 203 einen Soll-Ist-Vergleich durch, indem der Sollwert 207 mit einem Istwert verglichen wird. Bei dem Istwert handelt es sich um eine Spannung an dem Widerstand R4, die mittels des RC-Glieds aus dem Widerstand R5 und dem Kondensator C6 gefiltert wird. Der analoge Sollwert 207 wird mittels des Analog-Digital-Wandlers 204 und der Spannungswert an dem Widerstand R4 wird mittels des Analog-Digital-Wandlers 210 in einen digitalen Wert umgewandelt. Die Verarbeitungseinheit 203 steuert den Frequenzzähler 201 und bestimmt damit die jeweils passende Betriebsfrequenz der Halbbrücke Q1, Q2, die wiederum über die Induktivität L1 in Verbindung mit den Kondensatoren C4 und C5 die Lampe 101 mit der gewünschten Leistung versorgt.

Im Falle eines Fehlers (dabei kann es sich auch um eine Vorheizphase oder um einen Zündbetrieb handeln), empfängt die Logikschaltung 205 das Fehlersignal 206 und steuert selbst den Frequenzzähler 201. Dies wird erreicht, indem die Logikschaltung 205 (über ihren Ausgang 208) die Umschalteinheit 202 so ansteuert, dass die an dem Ausgang 209 bereitgestellte Frequenz direkt den Frequenzzähler 201 einstellt.

Ist der Fehler vorüber, so übergibt die Logikschaltung 205 (mittels ihres Ausgangs 208) die Steuerung der Frequenz wieder an die digitale Verarbeitungseinheit 203.

Hierbei ist es von Nachteil, dass die digitale Verarbeitungseinheit 203 verhältnismäßig langsam ist und Rechenzyklen vorgibt, die nur relativ selten (z.B. alle 100μs) eine Aktualisierung der Frequenz des Frequenzzählers 201 ermöglicht. Dieser Effekt verstärkt sich zudem dadurch, dass die Analog-Digital-Wandler 204 und 210 eine Verarbeitungszeit (z.B. ca. 10μs) zur Umwandlung der analogen Signale benötigen. Eine hieraus resultierende Totzeit von ca. 110μs kann die Stabilität der Regelung deutlich beeinträchtigen.

Die **Aufgabe** der Erfindung besteht darin, die vorstehend genannten Nachteile zu vermeiden und insbesondere eine effiziente Möglichkeit für eine Ansteuerung einer Lampe anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Schaltung zur Ansteuerung einer Lampe, insbesondere einer Leuchtstofflampe, vorgeschlagen. Die Lampe wird über eine Brückenschaltung, z.B. eine Voll- oder Halbbrückenschaltung, betrieben. Die Schaltung umfasst eine analoge Regelung (z.B. eine analoge Regelschaltung) zur Ansteuerung der Brückenschaltung in einem ersten Betriebsmodus und eine Logikschaltung (z.B. eine digitale Regelschaltung) zur Ansteuerung der Brückenschaltung in einem zweiten Betriebsmodus.

Hierbei ist es von Vorteil, dass die Schaltung nur geringe Verzögerungen aufgrund benötigter Signalwandlung aufweist und damit die Totzeit der analogen Regelung in dem ersten Betriebsmodus gering im Vergleich zu einer rein digitalen Regelung ist. Dadurch wird ein hohes Maß an Regelstabilität erreicht. Weiterhin ist es ein Vorteil, dass die Verarbeitung der Signale in den beiden Betriebsmodi getrennt voneinander durchgeführt werden kann und dass so eine wirksame Entkopplung der Betriebsmodi erreicht wird.

Eine Weiterbildung ist es, dass der erste Betriebsmodus ein Normalmodus ist, in dem die Lampe leuchtet und insbesondere weder eine zu hohe Ausgangsspannung der Schaltung noch ein zu hoher Strom in der Brückenschaltung auftritt.

In dem Normalmodus wird die Lampe (z.B. gedimmt) betrieben und leuchtet entsprechend.

Eine andere Weiterbildung ist es, dass der zweite Betriebsmodus ein Fehlermodus ist umfassend insbesondere einen Vorheizmodus und/oder einen Zündmodus, in dem die Lampe insbesondere nicht leuchtet.

Hierbei umfasst der Betriebsmodus z.B. alle Modi, in denen die Lampe (noch) nicht leuchtet oder alle Modi, die nicht dem Normalmodus entsprechen, wie eine zu hohe Ausgangsspannung oder ein Überstrom in der Brückenschaltung. Insbesondere ist der Zündmodus kurz vor oder beim Zünden der Lampe ein solcher zweiter Betriebsmodus. Auch ist der Vorheizmodus vor dem Zünden der Lampe ein zweiter Betriebsmodus.

Auch ist es eine Weiterbildung, dass der Fehlermodus einen Zustand umfasst, in dem die Lampe leuchtet, wobei insbesondere die Schaltung eine Ausgangsspannung aufweist, die größer als ein vorgegebener Spannungs-Schwellwert ist und/oder wobei in der Brückenschaltung ein Strom fließt, der größer als ein vorgegebener Strom-Schwellwert ist.

Somit kann der Fehlermodus auch den Zustand einer Überspannung am Ausgang der Schaltung bzw. einen Überstrom in der Brückenschaltung umfassen.

Insbesondere ist es eine Weiterbildung, dass die Brückenschaltung eine Halbbrückenschaltung mit zwei elektronischen Schaltern, insbesondere zwei Transistoren oder zwei Mosfets, aufweist, deren Mittenabgriff über eine Induktivität mit der Lampe verbunden ist.

Alternativ kann die Brückenschaltung auch eine Vollbrückenschaltung umfassen.

Auch ist es eine Weiterbildung, dass die Brückenschaltung über einen Frequenzzähler ansteuerbar ist, wobei die analoge Regelung in dem ersten Betriebsmodus mit dem Frequenzzähler über einen Analog-Digital-Wandler verbunden ist.

Somit stellt die analoge Regelung in dem ersten Betriebsmodus ein analoges Signal bereit, das über den Analog-Digital-Wandler in ein digitales Signal gewandelt und zur Ansteuerung des Frequenzzählers verwendet wird.

Bei dem Frequenzzähler handelt es sich insbesondere um eine Einheit zur Ansteuerung der Brückenschaltung, insbesondere zur Ansteuerung elektronischer Schalter (z.B. Mosfets oder Transistoren) einer Halb- oder einer Vollbrückenschaltung. Der Frequenzzähler setzt hierzu ein digitales Eingangssignal, das einer Frequenz entspricht, zur Ansteuerung der Brückenschaltung um. Je höher die Frequenz, desto schneller wechselt die von dem Frequenzzähler bereitgestellte Ansteuerung der elektronischen Schalter.

Ein Vorteil besteht somit darin, dass eine Betriebsfrequenz der Brückenschaltung mittels des Frequenzzählers digital einstellbar ist.

Ferner ist es eine Weiterbildung, dass eine Umschaltung zwischen dem ersten Betriebsmodus und dem zweiten Betriebsmodus über eine Umschalteinrichtung erfolgt, die dem Frequenzzähler vorgeschaltet ist und mit einem Ausgang des Analog-Digital-Wandlers sowie mit einem Ausgang der Logikschaltung verbunden ist.

Im Rahmen einer zusätzlichen Weiterbildung veranlasst die Logikschaltung über ein Steuersignal, insbesondere über einen weiteren Ausgang, der mit der Umschalteinheit verbunden ist, die Umschaltung zwischen dem ersten Betriebsmodus und dem zweiten Betriebsmodus.

Somit kann erreicht werden, dass die Logikschaltung mittels der Umschalteinheit den Wechsel zwischen dem ersten Betriebsmodus, in dem die analoge Regelung die Brückenschaltung ansteuert, und dem zweiten Betriebsmodus, in dem die Logikschaltung eine Frequenz zur Ansteuerung der Brückenschaltung bereitstellt, steuert.

Eine nächste Weiterbildung besteht darin, dass die Umschaltung von dem ersten Betriebsmodus in den zweiten Betriebsmodus erfolgt, falls ein Fehlersignal detektiert wird.

Insbesondere kann eine Umschaltung zwischen dem ersten Betriebsmodus und dem zweiten Betriebsmodus erfolgen, falls das Fehlersignal detektiert wird.

Das Fehlersignal kann anzeigen, dass es sich nicht um einen Normalbetrieb der Lampe handelt, d.h. dass die Lampe z.B. nicht leuchtet oder dass sie leuchtet, aber die an ihr abfallende Spannung zu hoch ist oder der Strom in der Brückenschaltung zu hoch ist. Anhand (der Erkennung) des Fehlersignals kann der zweite Betriebsmodus gestartet werden. Das Fehlersignal kann insbesondere anzeigen, dass ein Zünden oder ein Vorheizen der Lampe erforderlich ist.

Eine Ausgestaltung ist es, dass die analoge Regelung einen Operationsverstärker umfasst, dessen invertierender Eingang mit einem Sollwert verbunden ist, dessen invertierender Eingang über einen Kondensator mit dem Ausgang verbunden ist und an dessen nichtinvertierendem Eingang ein Istwert einer Lampenleistung oder eines Lampenstroms bestimmbar ist.

Bei dem Sollwert kann es sich um einen Dimmwert handeln, d.h. einen Wert der einer Helligkeitsvorgabe zur Einstellung der Lampe entspricht. Dieser Wert kann z.B. über einen Spannungsteiler oder eine Spannungsquelle mit einem regelbaren Widerstand von einem Benutzer eingestellt werden.

Eine alternative Ausführungsform besteht darin, dass während des zweiten Betriebsmodus, solange die Lampe nicht leuchtet, die analoge Regelung so eingestellt wird, dass ein von ihr bereitgestelltes Ausgangssignal zur Ansteuerung der Brückenschaltung einer Frequenz entspricht, die zwischen der Betriebsfrequenz während des Vorheizens und der Betriebsfrequenz beim Zünden liegt.

Mit anderen Worten kann die analoge Regelung auch in dem zweiten Betriebsmodus solange die Lampe nicht leuchtet und während sie nicht die Brückenschaltung ansteuert, voreingestellt werden derart, dass bei einer Umschaltung auf den ersten Betriebsmodus (also bei Übernahme der Ansteuerung durch die analoge Regelung) ein Zündblitz verhindert wird. Dabei wird die analoge Regelung beispielsweise so eingestellt, dass ihr analoges bzw. digitalisiertes Ausgangssignal einer Betriebsfrequenz für die Brückenschaltung entspricht, die zwischen der Vorheizfrequenz und der Zündfrequenz liegt.

Eine nächste Ausgestaltung ist es, dass das Ausgangssignal der analogen Regelung einem Mittelwert aus der Spannung für die aktuelle Betriebsfrequenz f und einer Spannung für eine Vorheizfrequenz $f_{max}$ entspricht.

Insbesondere kann das Ausgangssignal der analogen Regelung so eingestellt werden, dass es einer Ansteuerung der Halbbrückenschaltung mit einer Frequenz in Höhe von

$$f/2 \;+\; f_{max}/2$$

entspricht, wobei f die aktuelle Betriebsfrequenz und $f_{max}$ die Vorheizfrequenz bezeichnen.

Eine weitere Ausführungsform besteht darin, dass während des zweiten Betriebsmodus, wenn die Lampe leuchtet, aber ihre Spannung zu hoch ist oder der Strom in der Brückenschaltung zu hoch ist, die Logikschaltung die Betriebsfrequenz schrittweise erhöht. Die analoge Regelung stellt dabei eine Regelabweichung fest und gibt bei dem Versuch, diese zu beseitigen, eine minimale Betriebsfrequenz vor.

Wenn keine Überspannung oder kein Überstrom detektiert wird, kann die die Logikschaltung die Frequenz wieder schrittweise reduzieren. Sobald die Regelabweichung minimal (gleich Null oder weniger als ein vorgegebener Schwellwert) ist, springt die Frequenzvorgabe der analogen Regelung auf die aktuelle Betriebsfrequenz. Daraufhin wird vom zweiten Betriebsmodus auf den ersten Betriebsmodus zurückgeschaltet.

Auch ist es eine Ausgestaltung, dass mit steigender Temperatur eine minimale Betriebsfrequenz begrenzbar ist.

Eine Weiterbildung besteht darin, dass eine temperaturabhängige Spannungsbegrenzung vorgesehen ist, anhand derer ein unterer Schwellwert eines von dem analogen Regler bereitgestellten Signals abhängig von der Temperatur begrenzbar ist.

Auch kann (stattdessen) zur Ausgangsspannung des analogen Reglers (z.B. des Operationsverstärkers) eine temperaturabhängige Spannung addiert werden.

Die vorstehend genannte Aufgabe wird auch gelöst durch eine Lampe, Leuchte oder Leuchtmodul umfassend mindestens eine der hier beschriebenen Schaltungen.

Auch wird die oben genannte Aufgabe gelöst mittels eines Verfahrens zur Ansteuerung einer Lampe, insbesondere einer Leuchtstofflampe, die über eine Brückenschaltung betrieben wird,

- wobei in einem ersten Betriebsmodus die Brückenschaltung über eine analoge Regelung angesteuert wird und
- wobei in einem zweiten Betriebsmodus die Brückenschaltung über eine Logikschaltung angesteuert wird.

Die oben beschriebenen Merkmale der Schaltung gelten für das Verfahren entsprechend.

Ausführungsbeispiele der Erfindung werden nachfolgend anhand der Zeichnungen dargestellt und erläutert.

Es zeigen:

Fig.3         ein schematisches Blockschaltbild mit einem elektronischen Betriebsgerät umfassend eine analoge Regelung sowie eine Logikschaltung zur Ansteuerung einer Brückenschaltung zum Betrieb einer Lampe, insbesondere einer Leuchtstofflampe;

Fig.4         ein Diagramm mit einer Betriebsfrequenz zur Ansteuerung der Halbbrückenschaltung bei brennender Lampe als eine Reaktion auf eine Überspannung oder einen Überstrom;

Fig.5         basierend auf der Schaltung gemäß Fig.3 ein schematisches Blockschaltbild mit einem elektronischen Betriebsgerät für eine Lampe zur Verhinderung eines Zündblitzes bzw. zur Voreinstellung des Operationsverstärkers;

Fig.6A und Fig.6B     je ein Diagramm, in dem die Betriebsfrequenz der Halbbrückenschaltung über der Zeit dargestellt ist;

Fig.7         ein schematisches Schaltbild basierend auf den Schaltungen gemäß Fig.3 oder Fig.5 umfassend eine temperaturabhängige Spannungsbegrenzung, die zwischen dem Operationsverstärker und dem Analog-Digital-Wandler angeordnet ist;

Fig.8     ein Diagramm mit einer Ausgangsspannung des analogen Reglers in Abhängigkeit von der Temperatur.

Es wird insbesondere eine Kombination eines analogen Reglers mit einer digitalen Frequenzerzeugung zur Ansteuerung einer Brückenschaltung zum Betrieb einer (Leuchtstoff)Lampe vorgeschlagen.

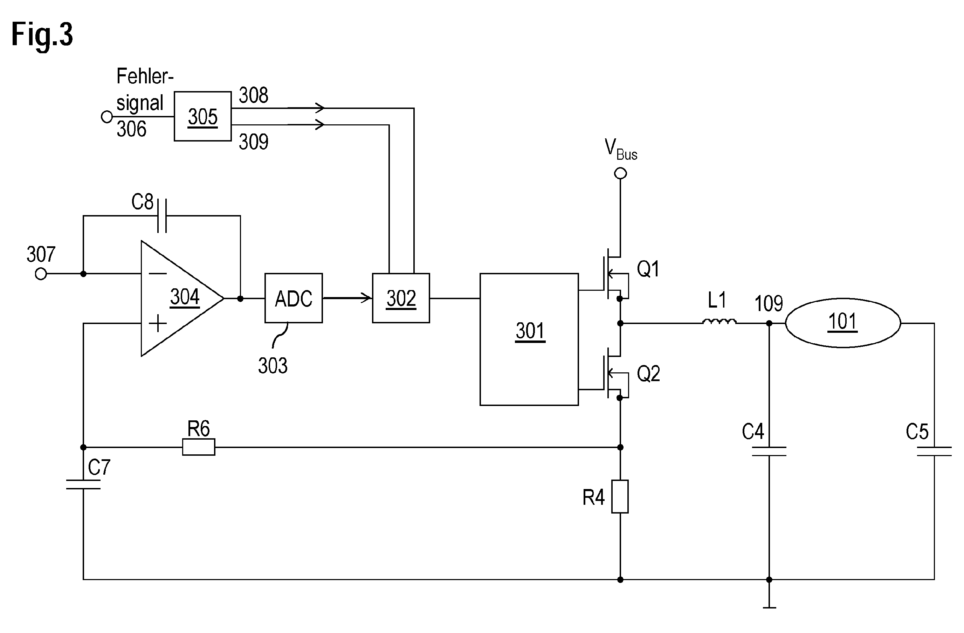

**Fig.3** zeigt ein schematisches Blockschaltbild mit einem elektronischen Betriebsgerät für eine Lampe 101.

Ein Fehlersignal 306 ist mit dem Eingang einer Logikschaltung 305 verbunden. Die Logikschaltung 305 weist einen Ausgang 308 auf, der den Betriebsmodus (Normalmodus oder Fehlermodus) anzeigt. Weiterhin verfügt die Logikschaltung 305 über einen Ausgang 309, der eine Frequenz zur Ansteuerung einer Halbbrückenschaltung angibt. Die Ausgänge 308 und 309 sind mit einer Umschalteinheit 302 verbunden.

Ein Sollwert 307 (z.B. ein von einem Benutzer einstellbarer Dimmwert, d.h. ein Wert zur Einstellung der Helligkeit der Lampe) wird an einen invertierenden Eingang eines Operationsverstärkers 304 geleitet, wobei der invertierende Eingang über einen Kondensator C8 mit dem Ausgang des Operationsverstärkers 304 verbunden ist. Der Ausgang des Operationsverstärkers 304 ist weiterhin über einen Analog-Digital-Wandler 303 mit der Umschalteinheit 302 verbunden. Die Umschalteinheit 302 ist ausgangsseitig mit dem Eingang des Frequenzzählers 301 verbunden.

Die Ausgänge des Frequenzzählers 301 sind mit der Halbbrückenschaltung umfassend Mosfets Q1 und Q2 verbunden, insbesondere mit den Gate-Anschlüssen der Mosfets Q1, Q2. Der Drain-Anschluss des Mosfets Q2 ist mit dem Source-Anschluss des Mosfets Q1 und über eine Induktivität L1 mit einem Knoten 109 verbunden. Der Drain-Anschluss des Mosfets Q1 ist mit einer Versorgungsspannung $V_{Bus}$ der Halbbrückenschaltung verbunden und der Source-Anschluss des Mosfets Q2 ist über einen Widerstand R4 mit Masse verbunden.

Die Lampe 101 ist einerseits mit dem Knoten 109 und andererseits über einen Kondensator C5 mit Masse verbunden. Zwischen dem Knoten 109 und Masse ist ein Kondensator C4 angeordnet.

Weiterhin ist der Source-Anschluss des Mosfets Q2 über einen Widerstand R6 mit dem nichtinvertierenden Eingang des Operationsverstärkers 304 verbunden, der über einen Kondensator C7 mit Masse verbunden ist.

Bei der Lampe 101 kann es sich beispielsweise um eine Leuchtstofflampe handeln.

Der (analoge) Operationsverstärker 304 fungiert als ein analoger Regler und führt einen Soll-Ist-Vergleich analoger Spannungen durch: Der (vorgegebene) Sollwert 307 wird mit der Spannung, die an dem Widerstand R4 abfällt, verglichen, wobei diese Spannung anhand des RC-Glieds aus dem Widerstand R6 und dem Kondensator C7 gefiltert wird.

Das von dem Operationsverstärker 304 bereitgestellte Ausgangssignal wird mittels des Analog-Digital-Wandlers 303 in ein digitales Signal gewandelt und im Normalmodus zur Steuerung des Frequenzzählers 301 eingesetzt (im Normalmodus ist der Operationsverstärker 304 über den Analog-Digital-Wandler 303 durch die Umschalteinheit 302 mit dem Frequenzzähler 301 Verbunden). Damit bestimmt der Operationsverstärker 304 die Betriebsfrequenz der Halbbrückenschaltung umfassend die Mosfets Q1, Q2, die über die Induktivität L1 in Verbindung mit den Kondensatoren C4 und C5 die Lampe 101 mit der gewünschten Leistung versorgt. Hierbei ist es von Vorteil, dass lediglich die von dem Analog-Digital-Wandler 303 benötigte Wandlungszeit zur Totzeit des analogen Reglers beiträgt. Damit weist der Regler insgesamt ein hohes Maß an Regelstabilität auf. Ein weiterer Vorteil besteht darin, dass der analoge Regler und die Logikschaltung wirksam voneinander entkoppelt sind. Ein anderer Vorteil ist es, dass die Betriebsfrequenz des Frequenzzählers 301 digital einstellbar ist.

Nach dem Einschalten des elektronischen Betriebsgeräts brennt die Lampe 101 zunächst noch nicht. Die Logikschaltung 305 steuert den Frequenzzähler 301 für eine Zeitdauer von ca. 0,5 Sekunden so an, dass dieser die relativ hohe Vorheizfrequenz für die Lampe 101 bereitstellt. Dabei ist die Spannung, die über der Lampe 101 abfällt, klein und ihre Elektroden werden vorgeheizt. Nach dieser Zeitdauer senkt die Logikschaltung 305 die Frequenz bis zu einer Zündfrequenz ab. Bei der Zündfrequenz wird durch eine Resonanzüberhöhung des LC-Glieds aus der Induktivität L1 und dem Kondensator C4 die zum Zünden der Lampe 101 erforderliche Spannung erzeugt. Sobald die Spannung den erforderlichen Wert überschreitet wird die Frequenz wieder angehoben. Wird keine Überspannung mehr erkannt, wird die Frequenz wieder abgesenkt. Auf diese Weise kann die Spannung auf einen erforderlichen Wert eingestellt werden bis die Lampe gezündet hat. Jetzt übernimmt der Operationsverstärker 304 die Frequenzsteuerung, der Normalbetrieb ist erreicht.

Falls im Normalbetrieb eine Überspannung oder ein Überstrom erkannt wird, empfängt die Logikschaltung 305 das Fehlersignal 306 und steuert selbst den Frequenzzähler 301. Dies wird erreicht, indem die Logikschaltung 305 (über ihren Ausgang 308) die Umschalteinheit 302 so ansteuert, dass die an dem Ausgang 309 bereitgestellte Frequenz direkt den Frequenzzähler 301 einstellt.

Insbesondere kann die Logikschaltung 305 schrittweise die Frequenz erhöhen. Wenn der Fehler nicht mehr vorhanden ist, kann die Logikschaltung 305 die Frequenz schrittweise verringern, solange bis die Regelabweichung verschwunden ist und der Operationsverstärker 304 wieder die Frequenzsteuerung übernehmen kann.

Das Anheben und das Absenken der Betriebsfrequenz kann jeweils unterschiedlich schnell erfolgen.

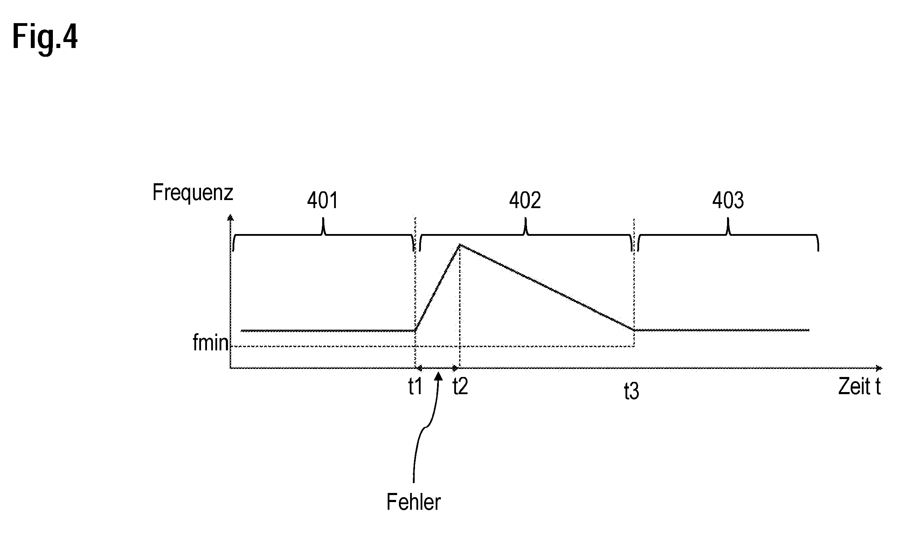

**Fig.4** enthält ein Diagramm, das die Betriebsfrequenz, mit der die Halbbrückenschaltung angesteuert wird, für unterschiedliche Modi der Regelung zeigt. In einem Zeitabschnitt 401 stellt der Operationsverstärker 304 die Betriebsfrequenz ein. Diese Betriebsfrequenz ist beispielhaft konstant, es handelt sich um den Normalmodus. Zu einem Zeitpunkt t1 tritt ein Fehler auf. Daraufhin erhöht die Logikschaltung die Betriebsfrequenz schrittweise bis der Fehler zu einem Zeitpunkt t2 verschwindet (in Fig.4 ist beispielhaft eine stufenlose Erhöhung der Betriebsfrequenz dargestellt). Ab dem Zeitpunkt t2 reduziert die Logikschaltung z.B. schrittweise die Betriebsfrequenz (wenn der Fehler nicht erneut auftritt) bis zu einem Zeitpunkt t3 (in Fig.4 symbolisch als kontinuierliche Abnahme der Betriebsfrequenz dargestellt). Ab dem Zeitpunkt t3 ist wieder der stationäre Wert der Betriebsfrequenz erreicht und der Operationsverstärker 304 übernimmt die Frequenzsteuerung. Insoweit ist der Normalmodus in einem Zeitabschnitt 403 wieder erreicht.

Der Zeitabschnitt 402 zwischen den Zeiten t1 und t3 kann als ein Fehlermodus bezeichnet werden. Während dieser Zeitdauer gibt die Logikschaltung 305 eine höhere Frequenz vor als zur Erfüllung der Sollwertvorgabe geeignet ist, so dass der Operationsverstärker 304 eine Regelabweichung feststellt und bei dem Versuch, diese zu beseitigen, seinen Ausgang auf OV einstellt, was der minimalen Betriebsfrequenz $f_{min}$ der Halbbrückenschaltung entspricht.

Ausgestaltung: Verhindern eines Zündblitzes

Im Bestreben die Lampenleistung durch Absenken der Betriebsfrequenz auf den Sollwert zu erhöhen, hält der Operationsverstärker 304 seinen Ausgang im Zündbetrieb auf OV. Wenn die Lampe 101 gezündet hat und die Steuerung der Betriebsfrequenz anhand der Umschalteinrichtung 302 an den Operationsverstärker 304 übergeben wird, betreibt dieser die Lampe 101 zunächst mit der kleinstmöglichen Frequenz, also mit der höchsten Leistung. Eine Reduktion der Leistung auf den Sollwert erfolgt nur verzögert aufgrund des in der Gegenkopplung angeordneten Kondensators C8. Hierbei kann ein störender Zündblitz entstehen.

Dieser Zündblitz kann wie folgt verhindert werden: Die Betriebsfrequenz in der untersten Dimmstellung liegt in etwa in der Mitte zwischen der Vorheizfrequenz und der Zündfrequenz. Dies gilt auch bei höheren Temperaturen, bei denen die Lampe 101 bereits bei kleinerer Spannung und entsprechend höherer Frequenz zündet.

Solange die Lampe 101 noch nicht leuchtet, wird der Ausgang des Operationsverstärkers 304 auf einer Spannung gehalten, die dem Mittelwert aus der Spannung für die aktuelle Betriebsfrequenz f und der Spannung für die Vorheizfrequenz $f_{max}$ entspricht. Nach dem Zünden wird die Lampe 101 zunächst in der untersten Dimmstellung betrieben und so der Zündblitz wirksam verhindert.

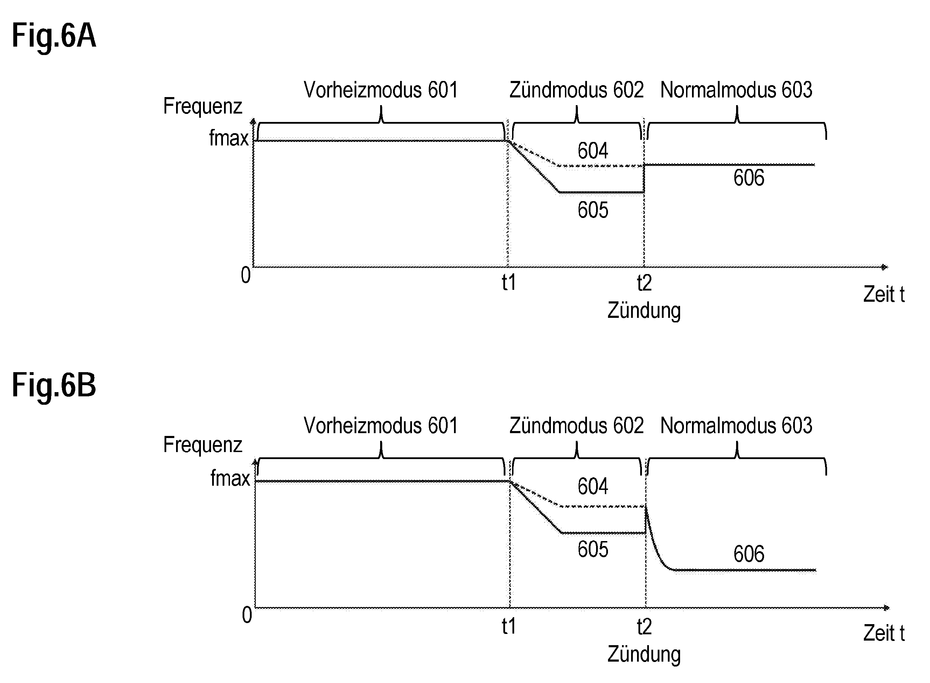

**Fig.6A** und **Fig.6B** zeigen je ein Diagramm, in dem die Betriebsfrequenz der Halbbrückenschaltung über der Zeit dargestellt ist.

Bis zu einem Zeitpunkt t1 wird die Lampe 101 vorgeheizt (Vorheizmodus 601), zwischen den Zeitpunkten t1 und t2 wird die Lampe 101 gezündet (Zündmodus 602) und ab dem Zeitpunkt t2 wird die Lampe 101 in dem Normalmodus 603 betrieben, in Fig.6A in der untersten Dimmstellung und in Fig.6B mit voller Leistung.

Die Betriebsfrequenz $f_{max}$ während des Vorheizmodus 601 wird von der Logikschaltung 305 bereitgestellt. Während des Zündmodus wird die Betriebsfrequenz 605 von der Logikschaltung 305 bereitgestellt, der Ausgang des Operationsverstärkers 304 wird dabei auf eine Spannung eingestellt, die der Betriebsfrequenz gemäß einem Verlauf 604 entspricht. Der Operationsverstärker übernimmt ab dem Zeitpunkt t2 in dem Normalmodus 603 die Bereitstellung der Betriebsfrequenz (siehe Verlauf 606) bzw. die Ansteuerung der Lampe 101. Durch die Voreinstellung des Ausgangs des Operationsverstärkers 304 auf eine Spannung, die dem Mittelwert aus der Vorheizfrequenz $f_{max}$ und aktueller Betriebsfrequenz entspricht, kann ein störender Zündblitz verhindert werden.

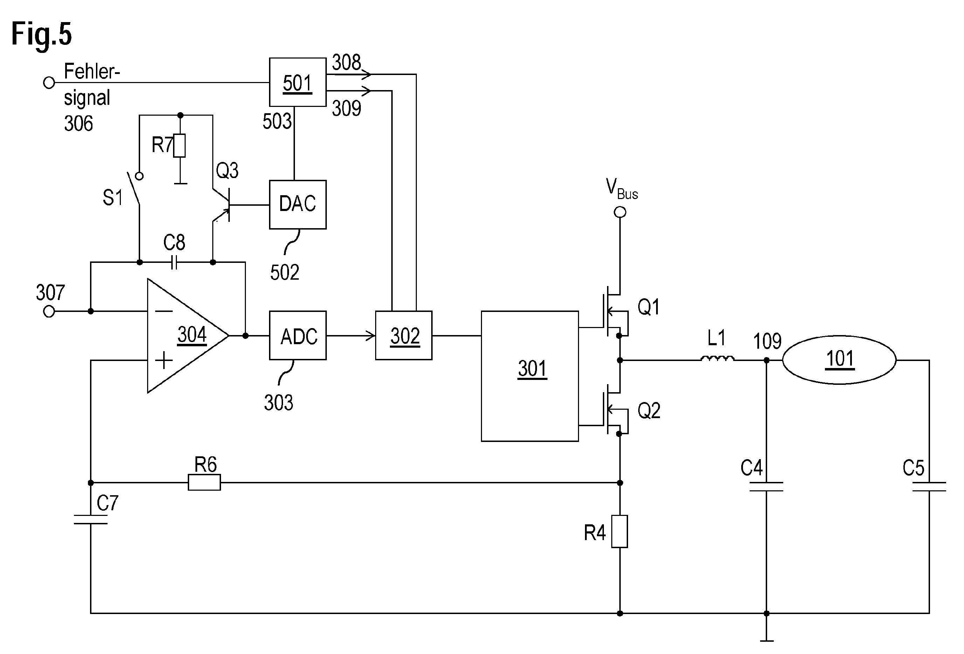

**Fig.5** zeigt basierend auf der Schaltung gemäß Fig.3 ein schematisches Blockschaltbild mit einem elektronischen Betriebsgerät für die Lampe 101 zur Verhinderung des Zündblitzes bzw. zur Voreinstellung des Operationsverstärkers 304. Nachfolgend werden die Unterschiede zwischen der Schaltung gemäß Fig.5 und der in Fig.3 gezeigten Schaltung erläutert. In Bezug auf die unveränderten Komponenten wird auf die vorstehenden Ausführungen verwiesen.

Das Fehlersignal 306 ist mit dem Eingang einer Logikschaltung 501 verbunden. Die Logikschaltung 501 weist entsprechend der in Fig.3 gezeigten Logikschaltung 305 einen Ausgang 308 auf, der den Betriebsmodus (Normalmodus oder Fehlermodus) anzeigt. Weiterhin verfügt die Logikschaltung 501 über einen Ausgang 309, der eine Frequenz zur Ansteuerung der Halbbrückenschaltung angibt. Die Ausgänge 308 und 309 sind mit der Umschalteinheit 302 verbunden.

Auch weist die Logikschaltung 501 einen Ausgang 503 auf, der über einen Digital-Analog-Wandler 502 mit der Basis eines pnp-Transistors Q3 verbunden ist. An dem Ausgang 503 wird von der Logikschaltung 501 ein digitaler Wert zur Einstellung einer Betriebsfrequenz

$$f_{Q3} \;=\; f/2 \;+\; f_{max}/2$$

bereitgestellt, wobei f die aktuelle Betriebsfrequenz und $f_{max}$ die Vorheizfrequenz bezeichnen.

Der Emitter des Transistors Q3 ist mit dem Ausgang des Operationsverstärkers 304 und der Kollektor des Transistors Q3 ist über einen Schalter S1 mit dem invertierenden Eingang des Operationsverstärkers 304 verbunden. Ein Widerstand R7 ist zwischen dem Kollektor des Transistors Q3 und Masse angeordnet.

Der Ausgang des Operationsverstärkers 304 kann durch den in dessen Gegenkopplung geschalteten und durch die Logikschaltung 501 entsprechend gesteuerten Transistor Q3 auf einen gewünschten Spannungswert eingestellt werden.

Die Logikschaltung 501 stellt an ihrem Ausgang 503 den digitalen Wert einer Spannung zur Einstellung der Betriebsfrequenz auf die Frequenz $f_{Q3}$ bereit. Der digitale Wert wird mittels des Analog-Digital-Wandlers 502 in einen entsprechenden analogen Spannungswert umgesetzt, der abzüglich einer Spannung von 0,5V zur Berücksichtigung der Basis-Emitter-Schwelle des Transistors Q3, den Transistor Q3 steuert. Der Widerstand R7 belastet die Sollwertvorgabe, die dadurch kleiner als die beim Vorheizen oder Zünden umgesetzte Leistung wird.

Diese Funktionalität ist nur während des Vorheizens und während des Zündens aktiv und wird inaktiv geschaltet, sobald die Lampe leuchtet (d.h. sobald der Normalmodus erreicht ist). Dies wird mittels des Schalters S1 erreicht, der geöffnet wird, sobald der Normalmodus erreicht ist. Der Schalter S1 kann ein elektronischer Schalter, z.B. ein Transistor oder ein Mosfet, sein, der z.B. von der Ansteuerlogik 501 gesteuert werden kann.

Ausgestaltung: Temperaturbegrenzung

Wird das elektronische Betriebsgerät in einer heißen Umgebung, insbesondere einer heißen Leuchte, eingesetzt, ist es von Vorteil, die Lampenleistung zu reduzieren, um die Bauteile des Betriebsgeräts thermisch zu entlasten und um Energie zu sparen, da bei hoher Umgebungstemperatur der Wirkungsgrad einer Leuchtstofflampe stark abnimmt.
Bei einem solchen Betrieb mit verminderter Leistung sinkt die Temperatur der Lampe und des Betriebsgeräts, wodurch wiederum der Wirkungsgrad ansteigt, so dass das emittierte Licht in etwa gleich bleibt.
Bei einem Betrieb mit voller Leistung sinkt die Brennspannung einer Leuchtstofflampe mit steigender Temperatur. Um auch bei steigender Temperatur die volle Leistung zur Verfügung zu stellen, sollte demgemäß das elektronische Betriebsgerät die Betriebsfrequenz reduzieren. Sobald die kleinstmögliche Betriebsfrequenz erreicht ist, tritt eine vorgegebene Leistungsreduzierung ein.
Die Ausgangsspannung des Operationsverstärkers 304 kann sich in einem bestimmten Bereich bewegen, z.B. in einem Bereich von OV bis 3,3V. Der nachgeschaltete Analog-Digital-Wandler 303 verarbeitet Eingangsspannungen in einem Bereich von 0,5V bis 3,3V. Bei einer Eingangsspannung von 0,5V oder weniger stellt der Analog-Digital-Wandler 303 den Frequenzzähler 301 auf die minimale Betriebsfrequenz ein.
In einer vorteilhaften Ausgestaltung kann zwischen dem Operationsverstärker 304 und dem Analog-Digital-Wandler 303 eine temperaturabhängige Spannungsbegrenzung angeordnet werden, deren kleinste Ausgangsspannung unterhalb einer vorgegebenen Temperatur, z.B. 80°C, kleiner oder gleich 0,5V ist, oberhalb dieser Temperatur aber über 0,5V liegt. Damit kann der Analog-Digital-Wandler 303 oberhalb der vorgegebenen Temperatur nicht mehr die minimale Betriebsfrequenz einstellen und die maximal mögliche Lampenleistung wird weiter gesenkt.

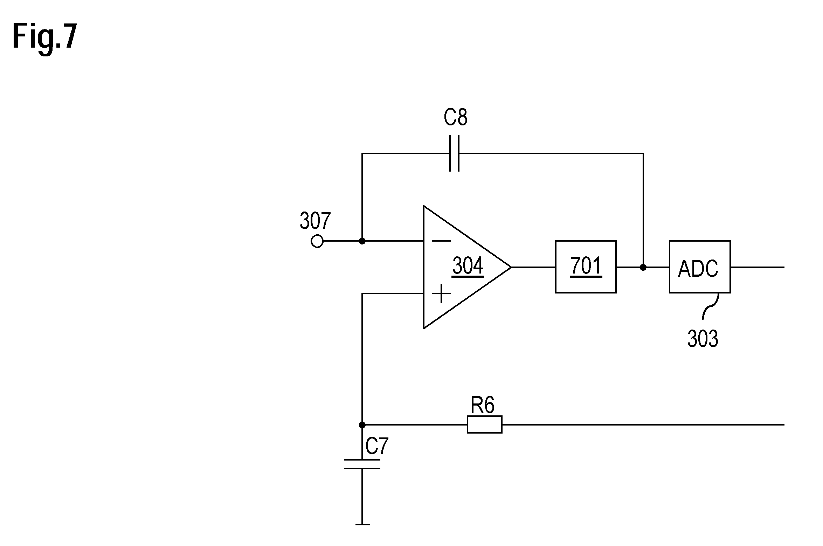

Fig.7 zeigt ein schematisches Schaltbild basierend auf den Schaltungen gemäß Fig.3 oder Fig.5 umfassend eine temperaturabhängige Spannungsbegrenzung 701, die zwischen dem Operationsverstärker 304 und dem Analog-Digital-Wandler 303 angeordnet ist.

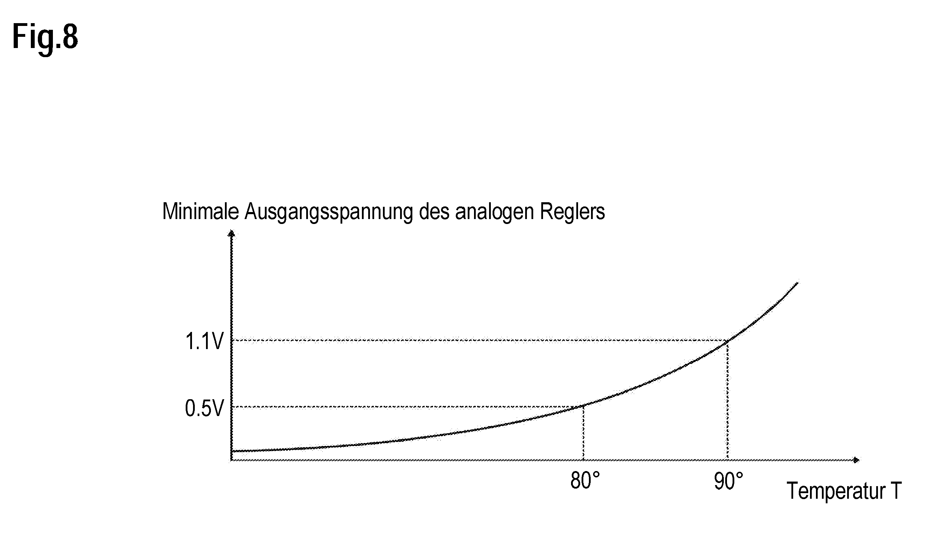

Fig.8 zeigt eine Ausgangsspannung des analogen Reglers in Abhängigkeit von der Temperatur T. Gemäß dem vorstehend ausgeführten Beispiel, kann die Ausgangsspannung nur bis 80°C unterhalb von 0,5V liegen. Oberhalb von 80°C gibt die temperaturabhängige Spannungsbegrenzung einen unteren Schwellwert größer als 0,5V für die Ausgangsspannung des analogen Reglers vor und begrenzt damit die maximal mögliche Lampenleistung.
Anstelle der temperaturabhängigen Spannungsbegrenzung kann zur Ausgangsspannung des Operationsverstärkers 304 auch eine temperaturabhängige Spannung addiert werden. Diese temperaturabhängige Spannung kann solange von dem Operationsverstärker ausgeregelt (kompensiert) werden, wie seine Ausgangsspannung größer als 0V ist. Wird die Ausgangsspannung des Operationsverstärkers 0V, so wirkt die addierte temperaturabhängige Spannung wie die vorstehend beschriebene Begrenzung.

**Bezugszeichenliste:**

101   Lampe

102   Operationsverstärker (analoge Regelung)

103   spannungsgesteuerter Oszillator (VCO)

104   Logikschaltung

105   Stromquelle (stellt Fehlerstrom $I_F$ bereit)

106   Sollwert

107   Fehlersignal

108   Knoten

109   Knoten

201   Frequenzzähler

202   Umschalteinheit

| 203 | digitale Verarbeitungseinheit (VE, Controller) |
|---|---|
| 204 | Analog-Digital-Wandler |
| 205 | Logikschaltung |
| 206 | Fehlersignal |
| 207 | Sollwert |
| 208 | Ausgang der Logikschaltung 205 (gibt an, ob Fehlermodus oder Normalmodus vorliegt) |
| 209 | Ausgang der Logikschaltung 205 (Betriebsfrequenz) |
| 210 | Analog-Digital-Wandler |
| 301 | Frequenzzähler |
| 302 | Umschalteinheit |
| 303 | Analog-Digital-Wandler |
| 304 | Operationsverstärker (analoge Regelung) |
| 305 | Logikschaltung |
| 306 | Fehlersignal |
| 307 | Sollwert |
| 308 | Ausgang der Logikschaltung 305 (gibt an, ob Fehlermodus oder Normalmodus vorliegt) |
| 309 | Ausgang der Logikschaltung 305 (Betriebsfrequenz) |
| 401 | Zeitabschnitt, Normalmodus |
| 402 | Zeitabschnitt, Fehlermodus |
| 403 | Zeitabschnitt, Normalmodus |
| 501 | Logikschaltung |
| 502 | Digital-Analog-Wandler |
| 503 | Ausgang der Logikschaltung (stellt Operationsverstärker ein) |
| 601 | Vorheizmodus |
| 602 | Zündmodus |
| 603 | Normalmodus |
| 604 | Verlauf der Betriebsfrequenz, deren zugehöriges analoges Ausgangssignal an dem Operationsverstärker 304 eingestellt wird |
| 605 | Verlauf der Betriebsfrequenz, die von der Logikschaltung eingestellt wird |
| 606 | Verlauf der Betriebsfrequenz, die von dem Operationsverstärker eingestellt wird |

| | | |
|---|---|---|
| 701 | temperaturabhängige Spannungsbegrenzung | |
| D1 | | Diode |
| S1 | | (elektronischer) Schalter (z.B. Transistor, Mosfet, o.ä.) |
| Q1 | | Mosfet |
| Q2 | | Mosfet |
| Q3 | | pnp-Transistor |
| L1 | | Induktivität (Spule) |
| $V_{Bus}$ | | Versorgungsspannung für Brückenschaltung |
| R1, R2, R4, R5, R6, R7: | | Widerstände |
| C1 - C8 | | Kondensatoren |

**Patentansprüche**

1. Schaltung zur Ansteuerung einer Lampe (101), insbesondere einer Leuchtstofflampe, die über eine Brückenschaltung betrieben wird,

   - mit einer analogen Regelung (304) zur Ansteuerung der Brückenschaltung in einem ersten Betriebsmodus,
   - mit einer Logikschaltung (305, 501) zur Ansteuerung der Brückenschaltung in einem zweiten Betriebsmodus.

2. Schaltung nach Anspruch 1, bei der der erste Betriebsmodus ein Normalmodus (401, 403, 603) ist, in dem die Lampe leuchtet und weder eine zu hohe Ausgangsspannung der Schaltung noch ein zu hoher Strom in der Brückenschaltung auftritt.

3. Schaltung nach einem der vorhergehenden Ansprüche, bei der der zweite Betriebsmodus ein Fehlermodus ist umfassend insbesondere einen Vorheizmodus (601) und/oder einen Zündmodus (602), in dem die Lampe insbesondere nicht leuchtet.

4. Schaltung nach einem der vorhergehenden Ansprüche, bei der der Fehlermodus einen Zustand umfasst, in dem die Lampe leuchtet, wobei insbesondere die Schaltung eine Ausgangsspannung aufweist, die größer als ein vorgegebener Spannungs-Schwellwert ist und/oder wobei in der Brückenschaltung ein Strom fließt, der größer als ein vorgegebener Strom-Schwellwert ist.

5. Schaltung nach einem der vorhergehenden Ansprüche, bei der die Brückenschaltung eine Halbbrückenschaltung mit zwei elektronischen Schaltern (Q1, Q2) aufweist, deren Mittenabgriff über eine Induktivität (L1) mit der Lampe (101) verbunden ist.

6. Schaltung nach einem der vorhergehenden Ansprüche, bei der die Brückenschaltung über einen Frequenzzähler (301) ansteuerbar ist, wobei die analoge Regelung (304) in dem ersten Betriebsmodus mit dem Frequenzzähler (301) über einen Analog-Digital-Wandler (303) verbunden ist.

7. Schaltung nach Anspruch 6, bei der eine Umschaltung zwischen dem ersten Betriebsmodus und dem zweiten Betriebsmodus über eine Umschalteinrichtung (302) erfolgt, die dem Frequenzzähler (301) vorgeschaltet ist und mit einem Ausgang des Analog-Digital-Wandlers (303) sowie mit einem Ausgang der Logikschaltung (305, 501) verbunden ist.

8. Schaltung nach Anspruch 7, bei der die Logikschaltung (305, 501) über ein Steuersignal, insbesondere über einen weiteren Ausgang (308), der mit der Umschalteinheit (302) verbunden ist, die Umschaltung zwischen dem ersten Betriebsmodus und dem zweiten Betriebsmodus veranlasst.

9.  Schaltung nach einem der Ansprüche 7 oder 8, bei der die Umschaltung zwischen dem ersten Betriebsmodus und dem zweiten Betriebsmodus erfolgt, falls ein Fehlersignal (306) detektiert wird.

10. Schaltung nach einem der vorhergehenden Ansprüche, bei der die analoge Regelung einen Operationsverstärker (304) umfasst, dessen invertierender Eingang mit einem Sollwert (307) verbunden ist, dessen invertierender Eingang über einen Kondensator (C8) mit dem Ausgang verbunden ist und an dessen nichtinvertierendem Eingang ein Istwert einer Lampenleistung oder eines Lampenstroms bestimmbar ist.

11. Schaltung nach einem der vorhergehenden Ansprüche, bei der solange die Lampe nicht leuchtet die analoge Regelung so eingestellt wird, dass ein von ihr bereitgestelltes Ausgangssignal (604) zur Ansteuerung der Brückenschaltung einer Frequenz entspricht, die zwischen der Betriebsfrequenz während des Vorheizens und der Betriebsfrequenz beim Zünden liegt.

12. Schaltung nach Anspruch 11, bei der das Ausgangssignal der analogen Regelung einem Mittelwert aus der Spannung für die aktuelle Betriebsfrequenz f und einer Spannung für eine Vorheizfrequenz $f_{max}$ entspricht.

13. Schaltung nach einem der vorhergehenden Ansprüche, bei der mit steigender Temperatur eine minimale Betriebsfrequenz begrenzbar ist.

14. Schaltung nach einem der vorhergehenden Ansprüche, bei der eine temperaturabhängige Spannungsbegrenzung (701) vorgesehen ist, anhand derer ein unterer Schwellwert eines von dem analogen Regler bereitgestellten Signals abhängig von der Temperatur begrenzbar ist.

15. Lampe, Leuchte oder Leuchtmodul umfassend mindestens eine Schaltung nach einem der vorhergehenden Ansprüche.

16. Verfahren zur Ansteuerung einer Lampe, insbesondere einer Leuchtstofflampe, die über eine Brückenschaltung betrieben wird,

    - wobei in einem ersten Betriebsmodus die Brückenschaltung über eine analoge Regelung angesteuert wird und
    - wobei in einem zweiten Betriebsmodus die Brückenschaltung über eine Logikschaltung angesteuert wird.

# Fig.1

Fehlersignal
107

104

105

$I_F$

$V_{Bus}$

C3

106

102

D1

108

103

Q1

Q2

L1

109

101

R1

C1

R2

C2

R4

C4

C5

EP 2 440 022 A2

# Fig.2

# Fig.3

EP 2 440 022 A2

EP 2 440 022 A2

# Fig.4

# Fig.5

Fehler-signal 306

307

R7

S1

Q3

C8

304

DAC

502

ADC

303

501 503

308

309

302

301

V_Bus

Q1

Q2

L1

109

101

R6

C7

R4

C4

C5

EP 2 440 022 A2

# Fig.6A

# Fig.6B

# Fig.7

# Fig.8

Minimale Ausgangsspannung des analogen Reglers

EP 2 440 022 A2